# EUROPÄISCHE PATENTSCHRIFT

(11) **EP 0 665 386 B1**
(45) Veröffentlichungstag und Bekanntmachung des Hinweises auf die Patenterteilung: **18.03.1998**
(21) Anmeldenummer: 95100326.8
(22) Anmeldetag: 12.01.1995
(51) Int. Cl.: F16D 55/224, B60T 1/06, F16D 65/097

(54) **Scheibenbremse**
Disc brake
Frein à disque

(30) Priorität: 01.02.1994 DE 4402960
(43) Veröffentlichungstag der Anmeldung: 02.08.1995
(73) Patentinhaber: BPW Bergische Achsen Kommanditgesellschaft, 51674 Wiehl (DE)
(72) Erfinder: Flick, Joachim, Dipl.-Ing., D-51674 Wiehl (DE)
(74) Vertreter: Stenger, Watzke & Ring Patentanwälte

(56) Entgegenhaltungen:
- EP-A- 0 186 537
- EP-A- 0 498 423
- DE-A- 3 526 114
- DE-B- 1 425 367

## Beschreibung

Die Erfindung betrifft eine Scheibenbremse für Kraftfahrzeuge mit einem am Achskörper auf Gleitführungen in Achsrichtung verschiebbar geführten Gleitsattel mit einem Bremszylinder, dessen Kolben unmittelbar auf einen innenliegenden, mit einem Bremsbelag versehenen Bremsbelagträger und durch die Reaktionskraft über den Gleitsattel mittelbar auf den außenliegenden, mit einem Bremsbelag versehenen Bremsbelagträger wirkt.

Derartige Scheibenbremsen sind bekannt. Sie haben den Nachteil, daß die Räder für einen Belagwechsel demontiert werden müssen, weil insbesondere der außenliegende Bremsbelagträger bei montiertem Rad nicht aus dem Gleitsattel herausgenommen werden kann.

Der Erfindung liegt die **Aufgabe** zugrunde, eine Scheibenbremse der eingangs beschriebenen Art derart weiterzubilden, daß ein Belagwechsel ohne Demontage des Rades durchgeführt werden kann.

Die **Lösung** dieser Aufgabenstellung durch die Erfindung ist dadurch gekennzeichnet, daß die Gleitführungen in Form von Führungsbuchsen für eine zur Außenseite über die Normalstellung hinaus erfolgende Verschiebung des Gleitsattels zum Wechsel der mit Bremsbelägen versehenen Bremsbelagträger verlängert sind und der Gleitsattel im Bereich seiner die Gleitführungen umgebenden Teile mit einer gegenüber der vom Kolben durchdrungenen Stirnfläche zurückversetzten Anschlagfläche ausgebildet ist.

Durch diese erfindungsgemäße Weiterbildung ergibt sich der Vorteil wesentlich verkürzter Wartungszeiten für die Scheibenbremse, da in der über die Normalstellung hinaus zur Achsaußenseite verschobenen Stellung des Gleitsattels auch der außenliegende Bremsbelagträger gegen einen neuen Bremsbelagträger ausgewechselt werden kann, ohne daß das Rad demontiert werden muß. Die Gleitführungen sind zu diesem Zweck verlängert und der Gleitsattel im Bereich seiner die Gleitführungen umgebenden Teile mit einer gegenüber der vom Kolben durchdrungenen Stirnfläche zurückversetzten Anschlagfläche ausgebildet. Hierdurch wird auf einfache Weise die Möglichkeit geschaffen, den Gleitsattel über die Normalstellung hinaus zur Achsaußenseite hin zu verschieben, wenn die Bremsbelagträger gewechselt werden sollen.

Aus der EP-A-0 489 423 war zwar bereits eine Scheibenbremse für Schienenfahrzeuge bekannt, bei der der Gleitsattel für einen Wechsel der Bremsbelagträger zur Außenseite über die Normalstellung hinaus verschiebbar gelagert ist; bei Schienenfahrzeugen mit unmittelbar auf das als Radbremsscheibe dienende Rad wirkenden Bremsbelägen entfallen jedoch die sich bei Kraftfahrzeug-Scheibenbremsen durch das die Scheibenbremse übergreifende Rad ergebenden räumlichen Einengungen, die Anlaß für die der Erfindung zugrundeliegende Aufgabenstellung sind.

Für Kraftfahrzeug-Scheibenbremsen, bei denen die mit Bremsbelägen versehenen Bremsbelagträger durch an einem Sicherungsfederhalter angeordnete Sicherungsfedern gegen Herausfallen gehalten sind, wird in Weiterbildung der Erfindung vorgeschlagen, den Sicherungsfederhalter mit seinem in Achsrichtung außenliegenden Ende in den Gleitsattel einzuhängen und mit seinem innenliegenden Ende durch einen Sicherungsstift lösbar am Gleitsattel zu befestigen. Hierdurch werden das Herausziehen des Sicherungsstiftes und das Abnehmen des mit den Sicherungsfedern versehenen Sicherungsfederhalters erleichtert, weil der am innenliegenden Teil des Gleitsattels angeordnete Sicherungsstift bei montiertem Rad besser zugänglich ist als bei der bekannten umgekehrten Anordnung.

Insgesamt ergibt sich mit dem erfindungsgemäßen Vorschlag der Vorteil, daß durch konstruktive Ausgestaltung der bekannten Scheibenbremse mit Gleitsattel eine erhebliche Arbeitsvereinfachung beim Wechsel der Bremsbelagträger dadurch erreicht werden kann, daß eine Demontage des Rades nicht mehr erforderlich ist.

In der Zeichnung ist ein Ausführungsbeispiel der erfindungsgemäßen Scheibenbremse dargestellt, und zwar zeigen:
- Fig. 1: einen waagerechten Schnitt durch eine mit einer Scheibenbremse versehene Radlagerung mit neuen Bremsbelägen,
- Fig. 2: eine der Fig. 1 entsprechende Schnittdarstellung, jedoch mit verschlissenen Bremsbelägen und
- Fig. 3: eine weitere Schnittdarstellung gemäß den Fig. 1 und 2 mit zwecks Wechsel des außenliegenden Bremsbelagträgers über die Normalstellung zur Achsaußenseite hin verschobenem Gleitsattel.

Die in den Zeichnungen dargestellte Radlagerung zeigt einen Teil eines Achskörpers 1, an dem eine Radnabe 2 drehbar gelagert ist. Die Radnabe 2 ist mit Radbolzen 3 zur Befestigung eines aus Felge 4 und Reifen 5 bestehenden Rades versehen.

An der Innenseite der Radnabe 2 ist mittels Befestigungsschrauben 6 eine Bremsscheibe 7 angeschraubt, die als innenbelüftete Ausführung dargestellt ist. Auf die einander gegenüberliegenden Bremsflächen der Bremsscheibe 7 wirken Bremsbeläge 8 ein, die jeweils an einem außenliegenden Bremsbelagträger 9a bzw. einem innenliegenden Bremsbelagträger 9i angeordnet sind.

Diese Bremsbelagträger 9a und 9i sind innerhalb eines rahmenartigen Gleitsattels 10 angeordnet, der auf Gleitführungen eines Bremsträgers 11 in Achsrichtung verschiebbar geführt ist. Dieser Bremsträger 11 ist an einem Träger 12 des Achskörpers 1 befestigt.

Beim dargestellten Ausführungsbeispiel bestehen die Gleitführungen jeweils aus einer Führungsbuchse 13, die mittels einer Zylinderschraube 14 an der innenliegenden Stirnfläche des Bremsträgers 11 befestigt ist. Auf diesen Führungsbuchsen 13 ist der mit entsprechenden Bohrungen versehene Gleitsattel 10 in Achsrichtung verschiebbar, wobei bei der praktischen Ausgestaltung die Lagerflächen des Gleitsattels als Führungshülse ausgebildet sind.

An der innenliegenden Seite des Gleitsattels 10 ist ein Bremszylinder 15 angeordnet, dessen Kolben 16 auf den innenliegenden Bremsbelagträger 9i mittelbar und durch die Reaktionskraft über den Gleitsattel 10 auf den außenliegenden Bremsbelagträger 9a mittelbar einwirkt.

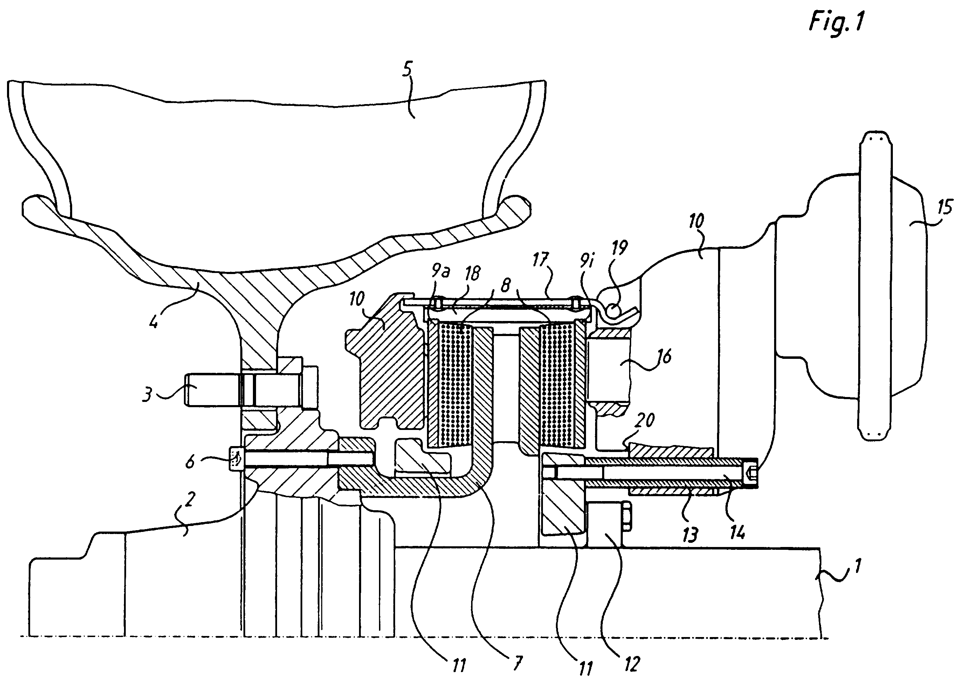

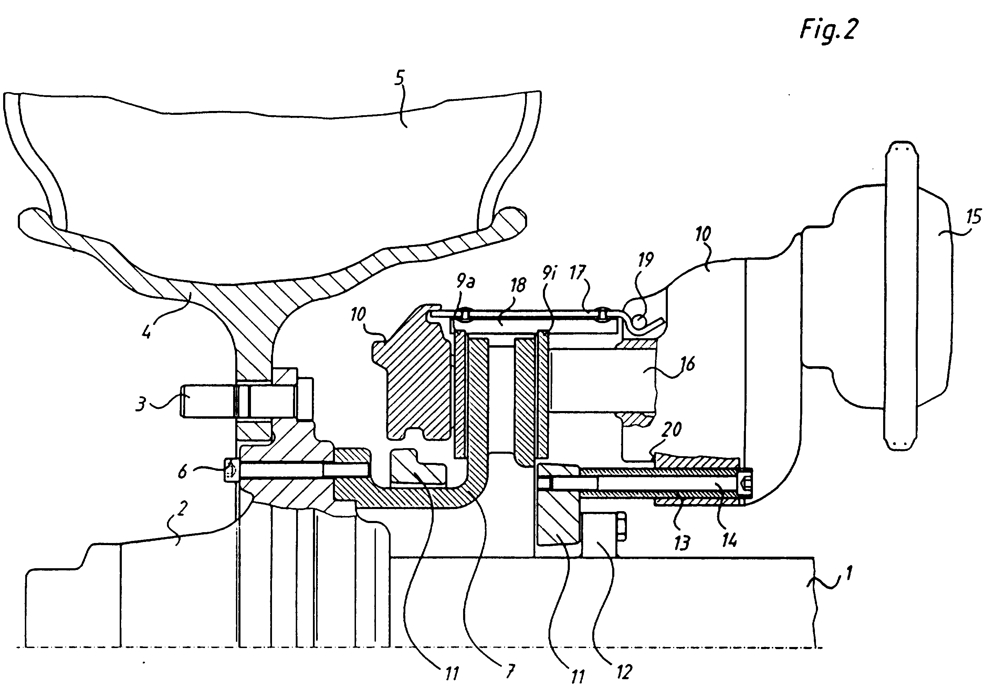

Um die Bremsbelagträger 9a und 9i gegen Herausfallen aus dem Gleitsattel 10 zu sichern, ist der Gleitsattel 10 an seiner Oberseite mit einem Sicherungsfederhalter 17 versehen, an dem eine oder mehrere, auf die Bremsbelagträger 9a und 9i einwirkende Sicherungsfedern 18 angeordnet sind. Beim Ausführungsbeispiel nach den Fig. 1 und 2 trägt der Sicherungsfederhalter 17 nur eine Sicherungsfeder 18, die auf beide Bremsbelagträger 9a und 9i wirkt.

Der Sicherungsfederhalter 17 ist mit seinem in Achsrichtung außenliegenden Ende in eine Nut des Gleitsattels 10 eingehängt und mit seinem innenliegenden Ende durch einen Sicherungsstift 19 lösbar am Gleitsattel 10 befestigt.

Während die Fig. 1 eine Scheibenbremse mit unabgenutzten Bremsbelägen 8 der Bremsbelagträger 9a und 9i zeigt, ist in Fig. 2 eine Situation dargestellt, bei der beide Bremsbeläge 8 vollständig verschlissen sind. Aus einem Vergleich der Fig. 1 und 2 geht hervor, daß in diesem Fall der Kolben 16 weit aus dem Gleitsattel 10 herausragt und daß demzufolge der Gleitsattel 10 auf den Führungsbuchsen 13 zur Fahrzeugmitte hin verschoben ist. Der Sicherungsstift 19 läßt sich ohne Demontage des aus Felge 4 und Reifen 5 bestehenden Rades aus dem Gleitsattel 10 herausziehen und der Sicherungsfederhalter 17 mit der Sicherungsfeder 18 vom Gleitsattel 10 abnehmen. Durch Zurückstellen des Kolbens 16 kann in dieser Stellung der innenliegende Bremsbelagträger 9i problemlos aus dem Gleitsattel 10 entnommen werden. Nach einer Verschiebung des Gleitsattels 10 zur Achsaußenseite hin läßt sich auch der außenliegende Bremsbelagträger 9a entfernen.

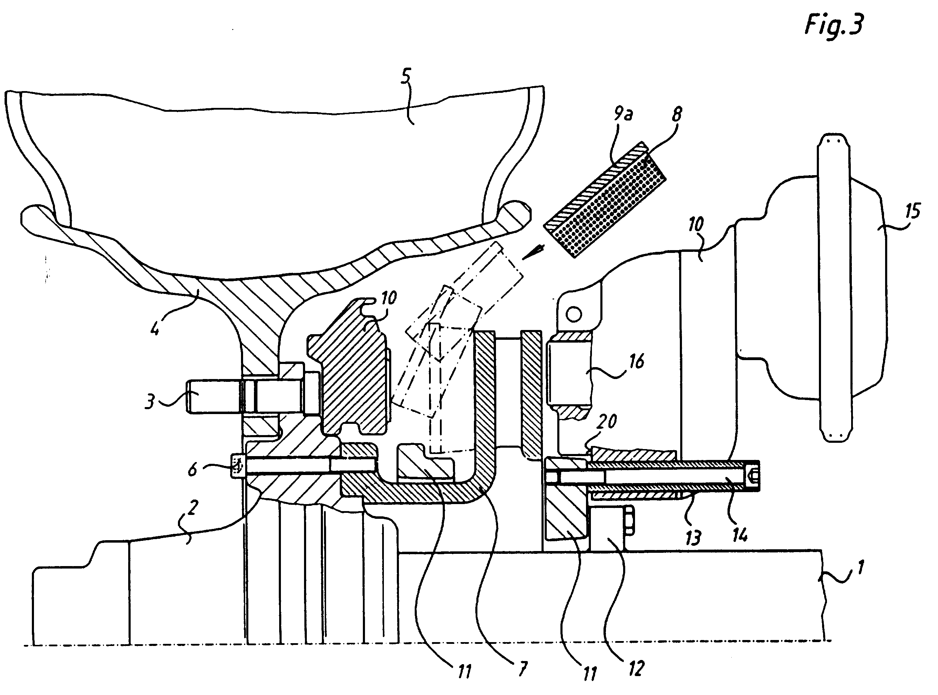

Wenn nunmehr bei vollständig zurückgestelltem Kolben 16 der Gleitsattel 10 über seine in Fig. 1 gezeichnete Normalstellung hinaus zur Achsaußenseite hin verschoben wird, wie dies in Fig. 3 gezeichnet ist, läßt sich problemlos ein mit einem neuen Bremsbelag versehener Bremsbelagträger 9a in den Gleitsattel 10 einsetzen. Anschließend wird der Gleitsattel 10 zur Fahrzeugmitte hin verschoben, so daß auch ein neuer innenliegender Bremsbelagträger 9i in den Gleitsattel 10 eingesetzt werden kann, ohne daß das Rad demontiert werden muß. Nach Einsetzen des Sicherungsfederhalters 17 und Einfügen des Sicherungsstiftes 19 ist die Scheibenbremse wieder betriebsbereit, ohne daß für den voranstehend beschriebenen Wechsel der Bremsbelagträger 9a und 9i das Rad demontiert werden mußte.

Für die voranstehend beschriebene Möglichkeit, den Gleitsattel 10 für einen Wechsel der Bremsbelagträger 9a und 9i über die Normalstellung hinaus zur Achsaußenseite zu verschieben, ist es lediglich erforderlich, die beim Ausführungsbeispiel durch die Führungsbuchsen 13 gebildeten Gleitführungen zur Fahrzeugmitte hin zu verlängern und die die Gleitführungen umgebende Anschlagfläche 20 des Gleitsattels 10 gegenüber der vom Kolben 16 durchdrungenen Stirnfläche des Gleitsattels 10 zurückzuversetzen.

### Bezugszeichenliste

- 1: Achskörper
- 2: Radnabe
- 3: Radbolzen
- 4: Felge
- 5: Reifen
- 6: Befestigungsschraube
- 7: Bremsscheibe
- 8: Bremsbelag
- 9a: Bremsbelagträger, außenliegender
- 9i: Bremsbelagträger, innenliegender
- 10: Gleitsattel
- 11: Bremsträger
- 12: Träger
- 13: Führungsbuchse
- 14: Zylinderschraube
- 15: Bremszylinder
- 16: Kolben
- 17: Sicherungsfederhalter
- 18: Sicherungsfeder
- 19: Sicherungsstift
- 20: Anschlagfläche

## Patentansprüche

1. Scheibenbremse für Kraftfahrzeuge mit einem am Achskörper (1) auf Gleitführungen (13) in Achsrichtung verschiebbar geführten Gleitsattel (10) mit einem Bremszylinder, (15), dessen Kolben (16) unmittelbar auf einen innenliegenden, mit einem Bremsbelag (8) versehenen Bremsbelagträger (9i) und durch die Reaktionskraft über den Gleitsattel (10) mittelbar auf den außenliegenden, mit einem Bremsbelag (8) versehenen Bremsbelagträger (9a) wirkt,
**dadurch gekennzeichnet**,
daß die Gleitführungen in Form von Führungsbuchsen (13) für eine zur Außenseite über die Normalstellung hinaus erfolgende Verschiebung des Gleitsattels (10) zum Wechsel der mit Bremsbelägen (8) versehenen Bremsbelagträger (9a, 9i) verlängert sind und der Gleitsattel (10) im Bereich seiner die Gleitführungen umgebenden Teile mit einer gegenüber der vom Kolben (16) durchdrungenen Stirnfläche zurückversetzten Anschlagfläche (20) ausgebildet ist.

2. Scheibenbremse nach Anspruch 1, wobei die mit Bremsbelägen (8) versehenen Bremsbelagträger (9a, 9i) durch an einem Sicherungsfederhalter (17) angeordnete Sicherungsfedern (18) gegen Herausfallen gehalten sind, dadurch gekennzeichnet, daß der Sicherungsfederhalter (17) mit seinem in Achsrichtung außenliegenden Ende in den Gleitsattel (10) eingehängt und mit seinem innenliegenden Ende durch einen Sicherungsstift (19) lösbar am Gleitsattel (10) befestigt ist.

## Claims

1. Disc brake for motor vehicles, having a sliding calliper (10) which is guided such that it can be displaced in the axial direction on slideways (13) on the axle body (1) and has a brake cylinder (15), the piston (16) of which acts directly on an inner brake pad carrier (9i), which is provided with a brake pad (8), and, by means of the reaction force, acts indirectly, via the sliding calliper (10), on the outer brake pad carrier (9a), which is provided with a brake pad (8), characterized in that the slideways, which are in the form of guide bushes (13), are, for the purpose of changing the brake pad carriers (9a, 9i), which are provided with brake pads (8), extended to enable the sliding calliper (10) to be displaced towards the outside beyond the normal position, and the sliding calliper (10) is designed, in the region of those parts of it which surround the slideways, with a stop surface (20) which is set back relative to the end surface, through which the piston (16) penetrates.

2. Disc brake according to Claim 1, the brake pad carriers (9a, 9i), which are provided with brake pads (8), being held such that they do not fall out by securing springs (18) arranged on a securing-spring retainer (17), characterized in that the securing-spring retainer (17) is fitted, with its outer end in the axial direction, in the sliding calliper (10) and is mounted with its inner end, in a manner which allows it to be released by means of a securing pin (19), on the sliding calliper (10).

## Revendications

1. Frein à disque pour véhicules automobiles, comprenant un étrier coulissant (10) guidé, avec une possibilité de translation dans la direction axiale, sur le corps de l'essieu (1) sur des moyens de guidage par glissement (13), et comprenant un cylindre de frein (15) dont le piston (16) agit directement sur un support intérieur de garniture de frein (9i) muni d'une garniture de frein (8) et, avec la force de réaction, par l'intermédiaire de l'étrier coulissant (10), indirectement sur le support extérieur de garniture de frein (9a) muni d'une garniture de frein (8), caractérisé en ce que les moyens de guidage par glissement sont prolongés sous la forme de douilles de guidage (13) permettant de déplacer l'étrier coulissant (10) vers le côté extérieur au-delà de sa position normale dans le but de remplacer les supports de garniture de frein (9a, 9i) munis de garnitures de frein, et l'étrier coulissant (10) comporte, dans la zone de ses éléments entourant les moyens de guidage par glissement, une surface de butée (20) en retrait par rapport à la face frontale traversée par le piston (16).

2. Frein à disque selon la revendication 1, les supports de garniture de frein (9a, 9i) munis de garnitures de frein (8) étant maintenus par des ressorts d'arrêt (18) disposés sur un support de ressorts d'arrêt (17) pour les empêcher de tomber, caractérisé en ce que le support de ressorts d'arrêt (17) est accroché dans l'étrier coulissant (10) par son extrémité située à l'extérieur dans la direction axiale, et est fixé de manière amovible à l'étrier coulissant (10) par son extrémité intérieure au moyen d'une broche d'arrêt (19).
